# EUROPEAN PATENT APPLICATION

(11) **EP 0 669 556 A1**
(43) Date of publication of application: **30.08.1995**
(21) Application number: 95200473.7
(22) Date of filing: 25.02.1995
(51) Int. Cl.: G03D 15/00, G03B 27/73

(54) **Method of making an index print**

(30) Priority: 28.02.1994 US 203149
(71) Applicant: EASTMAN KODAK COMPANY, Rochester, New York 14650-2201 (US)
(72) Inventor: Manico, Joseph Anthony, c/o Eastman Kodak Co., Rochester, New York 14650-2201 (US); Patton, David Lynn, c/o Eastman Kodak Co., Rochester, New York 14650-2201 (US); Roule, Thomas Richard, c/o Eastman Kodak Co., Rochester, New York 14650-2201 (US); Fredlund, John Randall, c/o Eastman Kodak Co., Rochester, New York 14650-2201 (US); Berardi, Anthony Ronald, c/o Eastman Kodak Co., Rochester, New York 14650-2201 (US)
(74) Representative: Phillips, Margaret Dawn

(57) **Abstract**

Described herein is a holder (24) and a method of making an index print using the holder (24). The holder (24) comprises a plurality of sleeves (30) into which a filmstrip (10, 11, 12, 13, 14, 15) can be placed. The method comprises the steps of inserting at least one filmstrip (10, 11, 12, 13, 14, 15) into the holder (24), scanning the holder (24) so as to obtain a digital record representative of the images present on each filmstrip (10, 11, 12, 13, 14, 15), and printing the digital record so as to form an index print.

## Description

The present invention relates to a method of making an index print from filmstrips.

An index print generally comprising a plurality of reduced size images which correspond to the frames of a roll of negative film. These index prints are used for quickly identifying what is present on a roll of negative film. These index prints are typically made by an optical system which exposes a single frame of the negative at a time on to the index print. This requires a significant amount of time and hardware in order to accomplish this.

It has also been suggested in the prior art of using a CRT printer for producing index prints. US-A-4 903 068 discloses a CRT printer wherein all of the frames which are exposed on the negative are stored in video signals in memory so that electrical composites can be created so as to form an index print at a single exposure. This, of course, requires sophisticated hardware and algorithms in order to properly operate the system.

Another problem associated with prior art index prints is that typically the negative film is returned to the user in a packet wherein the negatives are placed in random order. Thus, the user must individually look at each of the strips until the appropriate negative is found of the image located on the index print.

The present invention provides a method for making an index print which is quick and relatively low cost and which does not require extensive hardware or software modifications. Additionally, the index print can be quickly associated with the negative film having the image thereon.

The present invention also comprises the advantage of generating index prints from an assortment of different strips of negatives or positives that originated from different rolls of film, thus allowing the consumer and operator to construct an index print according to their needs.

In accordance with one aspect of the present invention, there is provided a method of producing an index print from at least one filmstrip having at least one image area, the method comprising the steps of:-
providing a film holder having at least one sleeve for holding said at least one filmstrip; and
scanning said film holder and the image areas present on said at least one filmstrip located therein so as to obtain a digital record.

In accordance with another aspect of the present invention, there is provided a holder comprising at least one sleeve which is designed to hold at least one filmstrip having at least one image area, each sleeve having a datum so as to identify the orientation of said holder and/or locate the at least one image area.

The holder may hold filmstrips from more than one film and is made of a material which allows digital scanning of the film while in the holder.

For a better understanding of the present invention, reference will now be made, by way of example only, to the accompanying drawings in which:-
Figure 1 is a graphic depiction of an assortment of photographic negative filmstrips;
Figure 2 is a graphic depiction of the photographic negative filmstrips of Figure 1 placed into a holder made in accordance with the present invention;
Figure 3 is a side view of the holder of figure 2 with out any filmstrips disposed therein;
Figure 4 is a schematic view of a photographic system used to make the index prints in accordance with the present invention;
Figure 5 is a internal schematic view of the CRT printer illustrated in Figure 3;
Figure 6 is a full diagram of the method of producing the index print in accordance with the present invention;
Figure 7 is a full diagram of an alternate method of making index prints in accordance with the present invention;
Figures 8A and 8B illustrate a full diagram of yet another method for making index prints in accordance with the present invention;
Figures 9a, 9b, 9c are index prints made from the filmstrips in holder 24 as set forth in various formats; and
Figure 10 is a perspective view of a modified holder made in accordance with the present invention.

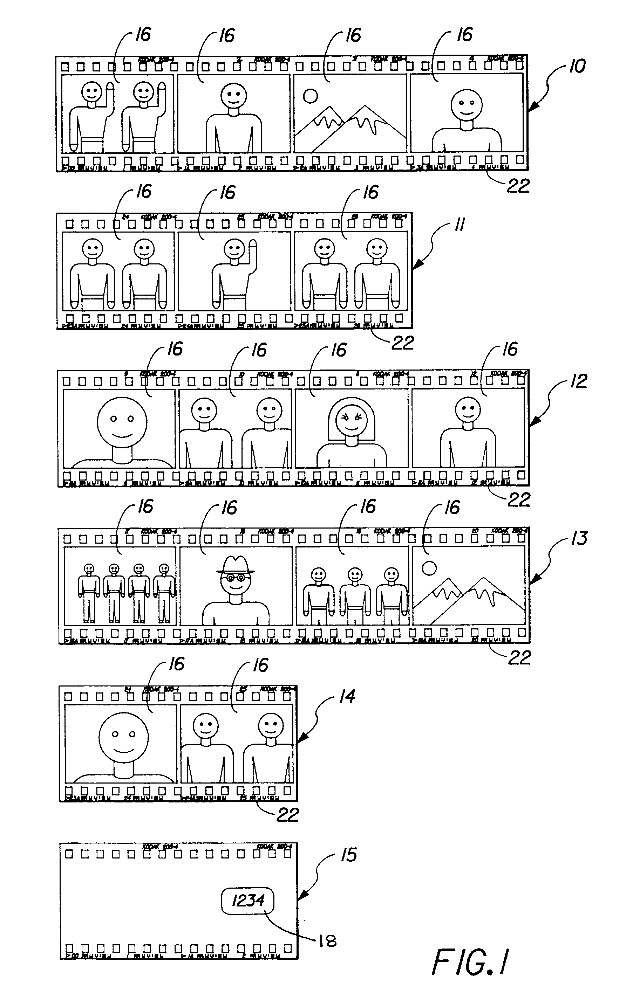

Referring initially to Figure 1, there is illustrated a plurality of negative filmstrips 10, 11, 12, 13, 14, 15 which can results from a single roll or from portions of a plurality of rolls of film. The negative filmstrips 10, 11, 12, 13, 14 are each provided with a plurality image areas 16. The negative filmstrip 15 contains no image area and instead is provided with a twin check label 18 which is typically used to identify the roll of negative filmstrips. As is typical with negative filmstrips, various information can be provided along the edges of the filmstrip. For example, DX bar-code, which is representative of the film type (the manufacture and film sensitivity) are printed in the form of a latent image on the side portion of a negative. In the embodiment illustrated, filmstrip 10 has Kodak 200-4 which identifies the film as coming from the Eastman Kodak Company and having an ASA of 200. In addition, there is also provided frame number bar-codes 22 which are used to identify desired frame identification such that when additional prints are provided, these image areas can be quickly identified.

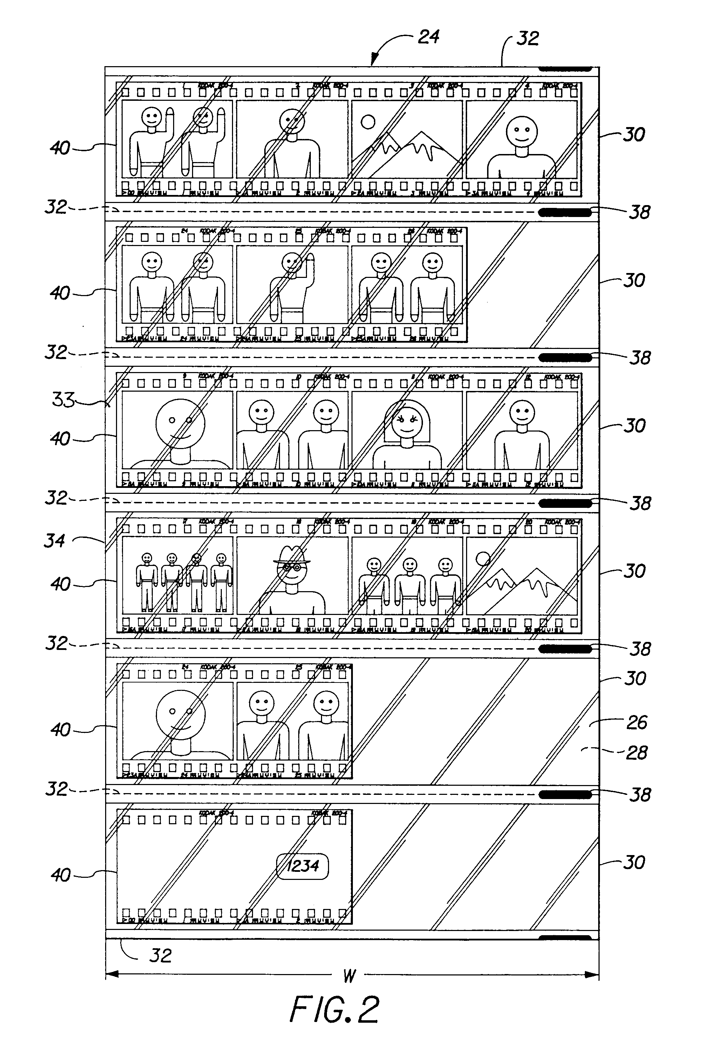

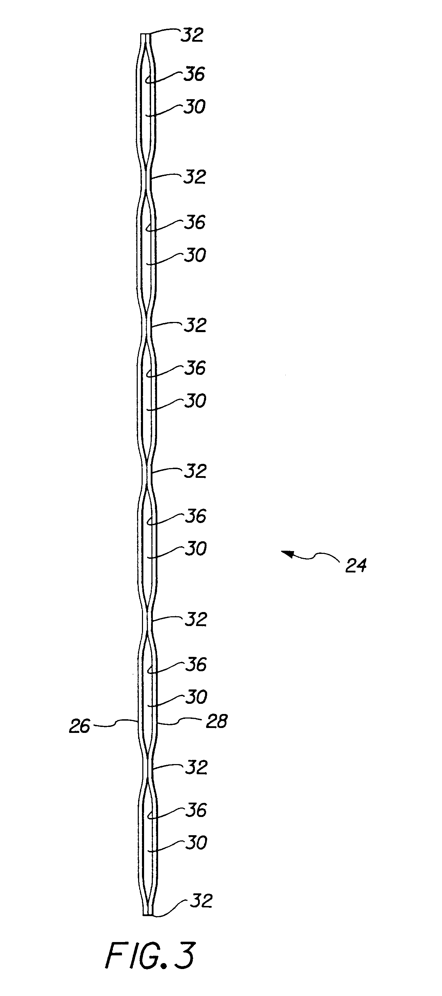

Referring to Figures 2 and 3, there is illustrated a holder 24 made in accordance with the present invention. In particular, the holder 24 comprises a pair of laminate sheets 26, 28 which are secured together so as to form a plurality of sleeves/pockets 30, each sleeve 30 is designed to hold a negative filmstrip. In the particular embodiment illustrated, the holder 24 is provided with six sleeves 30. However, it is to be understood that any desired number of sleeves 30 may be provided. In addition, the width W of the holder is selected so as to accommodate any appropriate size filmstrip. In the embodiment illustrated, the sheets 26, 28 are secured together at lines of contact 32, by standard heat sealing techniques, which define the height of the sleeves 30. The sheets 26, 28 are also preferably secured continuously, also by heat sealing, along edge 34 to form a seal 33. While in the preferred embodiment illustrated the sheets 26, 28 are secured together by heat sealing techniques, the sheets may be secured together by any desired method, for example, by adhesive or other mechanical securing means such as sewing. Thus, there is provided an opening 36 which allows the filmstrip negative to be mechanically or manually inserted or removed from the sleeves 30.

The holder 24 is also provided with datum 38 which can be used to identify the orientation of the filmstrip negative 10, 11, 12, 13, 14, 15 place therein. The datum 38 is simply a making of any color, configuration or pattern that can be recognized by the scanner. In the embodiment illustrated datum 38 is generally oval in shape and black in coloration. In particular, the datum 38 could be used such that when the negatives are inserted and the datum is in a predetermined position, the images will be properly oriented for scanning, as opposed to a backward position. Additionally, datum 38 can be used as a reference so to assist in editing unwanted information that has been scanned. In the embodiment illustrated, the datum 38 will be on the right-hand side of the holder when the images are properly positioned. The seal 33 along edge 34 allows position of each of the negative filmstrips 10, 11, 12, 13, 14 such that the left edge 40 are all substantially aligned with each other.

The holder 24 is made of a material which allows exposure of the negative filmstrips while within the holder 24. Preferably, the holder 24 is made of a transparent material which will not interfere the exposure of the images thereon. Typically the holder is made of a clear polyethylene. However, in certain situations it may be desirable to provide a tint or coloration to the print to be developed in which case the holder 24 may be provided in a different color.

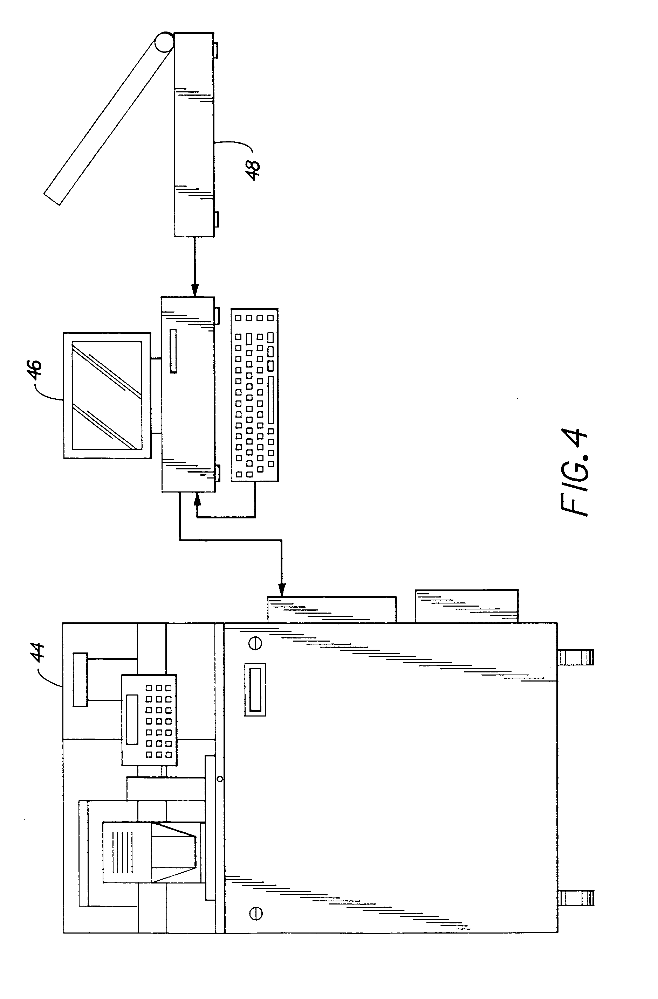

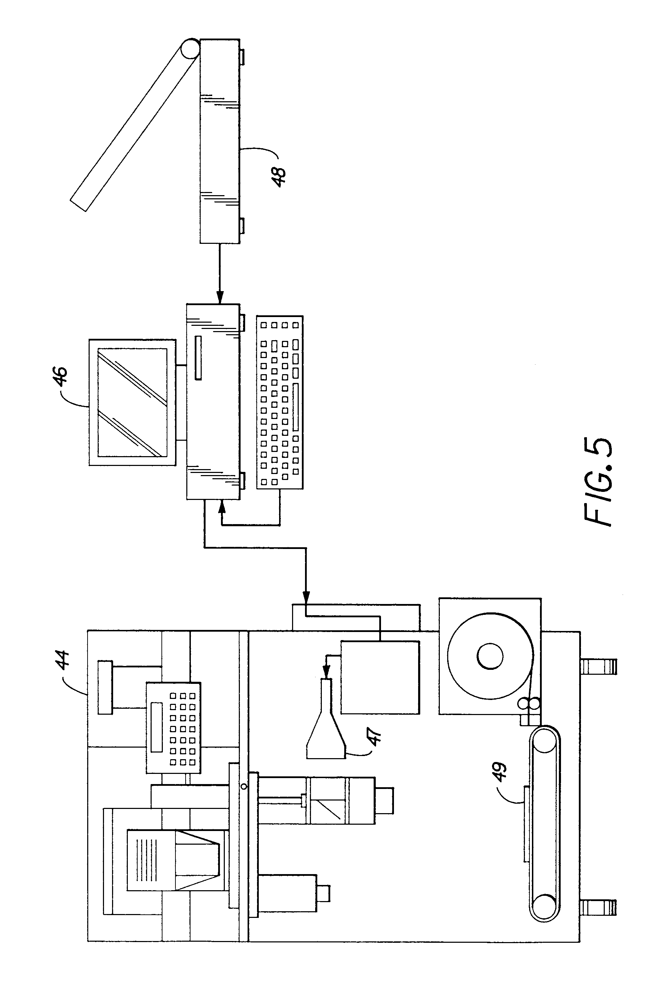

Referring to Figures 4 and 5 there is illustrated a system which can be used to make index prints for utilizing a holder 24 illustrated in Figures 1 and 2 containing negative filmstrips therein. In particular, this system includes a printer 44 which can take a digital record and print it. In the particular embodiment illustrated, the printer 44 is a CRT printer.

There is also provided a CPU/computer 46 which is used to allow entry of data and control the printer 44. The CRT printer is provided with a cathode ray tube 47 which projection an image on to a photosensitive material 49, for example, photosensitive paper which is then processed for development. It is, of course, understood that any other desired printer, other output format/device may be utilized for printing/storing of the image, for example, but not by way of limitation, thermal printers, LED printers, electrophotographic printers, or other digital-type printers.

The system further includes a digital scanner 48 for scanning an image placed in the scanner and converting the information to a digital signal. An appropriate digital scanner that can be utilized is exemplified by the Hewlett Packard ScanJet IICX color scanner with optional transparency adapter.

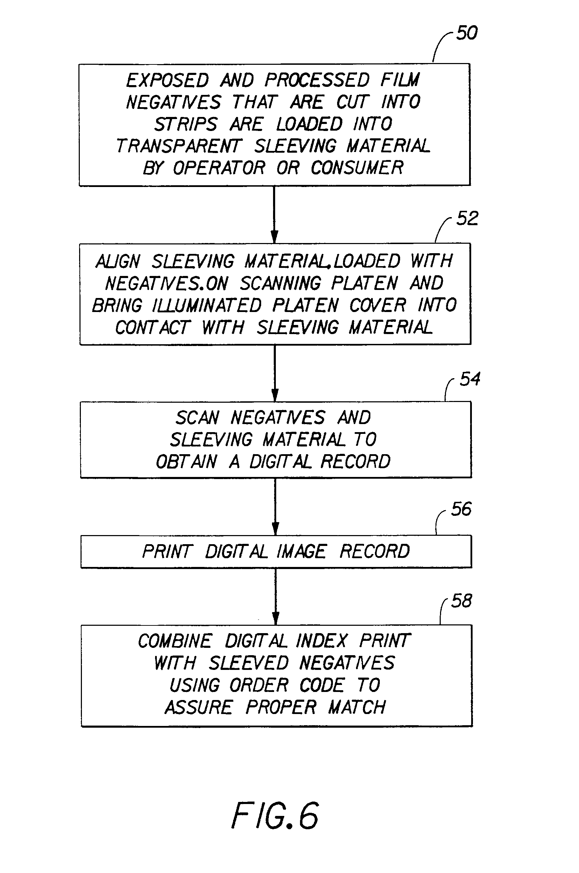

Referring to Figure 6, there is illustrated a flow diagram of one method of producing index prints in accordance with the present invention. In particular, the first step 50 is that the cut negative filmstrips are loaded into the holder 24. The next step 52 would be to provide the holder 24, with the exposed processed negatives therein, on to the platen of the digital scanner 48. Preferably, the holder 24 is placed in a predetermined position so that the index prints produced fully utilizes the area available on the index print. Once this has been done, the next step 54 is to scan the negative filmstrips while in the holder 24 so as to obtain a digital record. As can be seen, the entire area of the holder 24 is scanned in a single step. The next step 56 would be to transfer this information on over to the printer by the appropriate software previously provided in the computer 46 such that a digital image can be formed by the printer 44. A suitable software package is sold by the Eastman Kodak Company under the Kodak Composite Machine trademark. The next step after that, of course, is to take the printed index print and combine it with the holder from which the index print is made in the step 58. For example, the index print can be put into a plastic sleeve/envelope (not shown) along with the holder 24 fan-folded therein, if necessary, so that the holder 24 can fit within the envelope with the index print. An index print made in accordance with the method set forth in Figure 6 would be the simplest and easiest to produce.

The present invention may be set up such that the index print can provide more detailed information. Additionally, if desired, the area between image areas and adjacent film negatives may be removed.

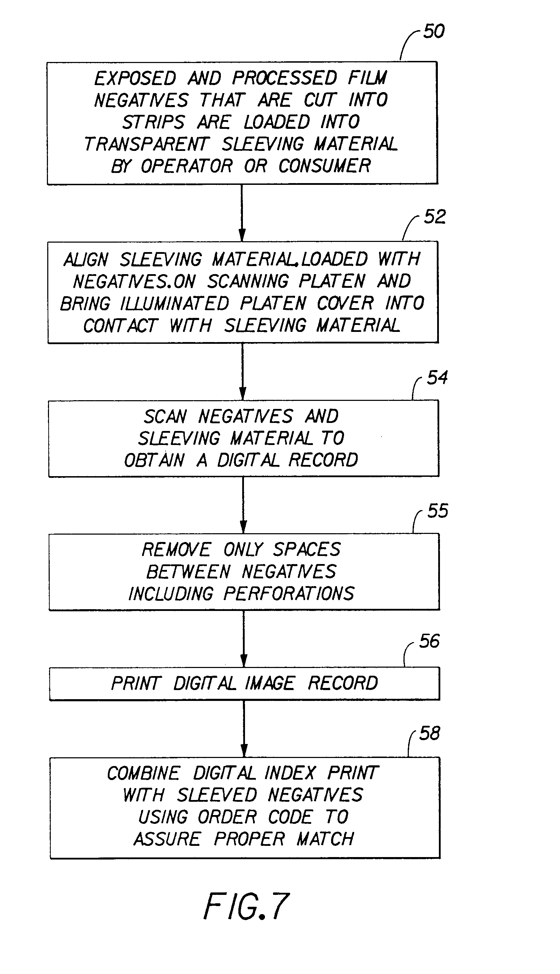

For example, referring to Figure 7, there is illustrated a flow chart similar to that illustrated in Figure 6, except that an extra step 55 is provided before printing of the digital index print. In particular, appropriate algorithms are provided in the CPU for removing spaces between negatives and the area defined by the perforations in the negative filmstrips. This can also be accomplished by the Kodak Composite Machine software previously described. By doing this, the index print produced will look more similar to other conventional index print.

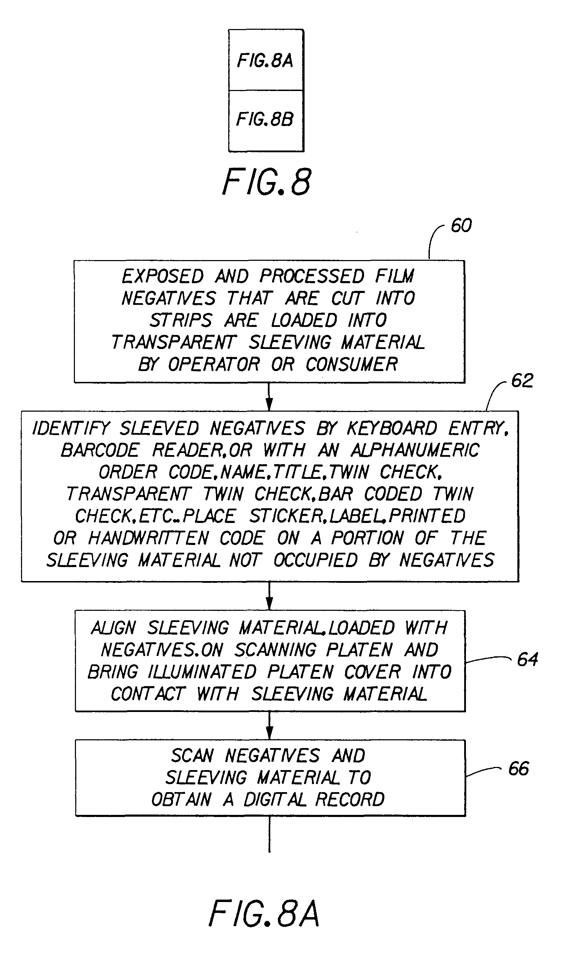

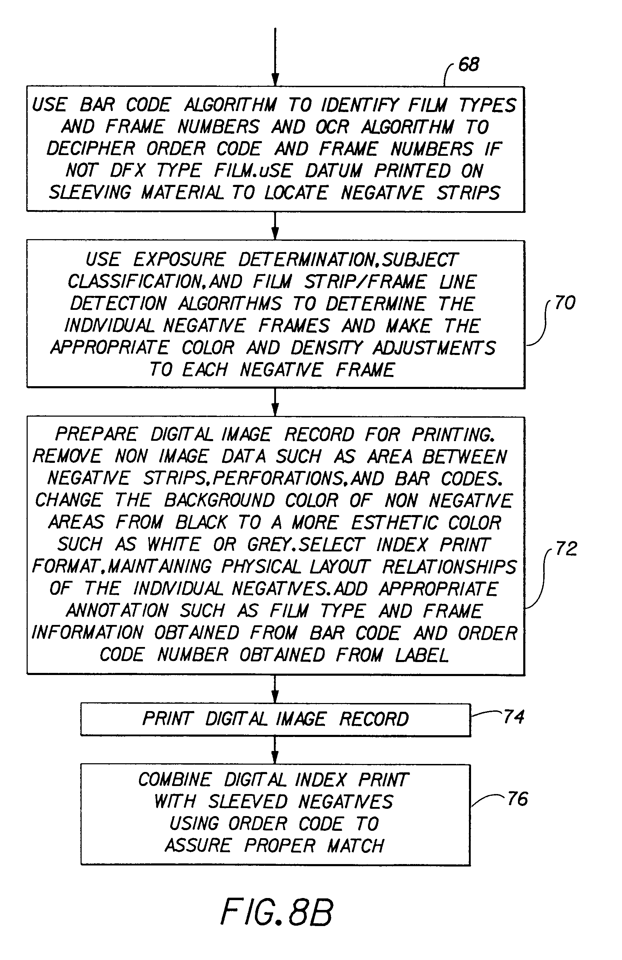

Because of the computer 46, various other manipulative steps may be provided for enhancing of the index print and provide further additional data. Referring to Figure 8, there is illustrated yet another method for producing index prints made in accordance with the present invention. In particular, the first step 60 comprises the placement of the negative filmstrips into the holder 24. The second step 62 is to obtain certain information provided in film. In particular, identifying the DX bar-code, frame bar-code, code twin check, or any other indicia that may be provided on the negative filmstrip in any optical recordable form. The Kodak Composite Machine software can also be used for this purpose. This information can be converted over to a sticker/label which can be placed on the holder 24 or directly hand-written by the operator or placed directly on the index print. Multiple index prints may be provided in the sleeve/envelope for a single holder. For example, when the holder has more images than is typically provided on a single index print, a second index print can be provided with the envelope so that all of the images can be reviewed in the holder. The next step 64 would be to align the holder 24 on to the platen of the digital scanner 48. The next step 66 would be to operate the scanner 48 so as to obtain a digital record of the images recorded on the negative strip. Then in step 68, the film type and frame numbers are identified. This information is stored for use in later printing this information on to the index print. The next step 70 would be to determine the individual image areas on the negative filmstrips such that any spaces or areas therebetween can be edited out. Additionally, appropriate measurements can be made regarding the color and density of the images so as to enhance the picture as it is printed out. Then in step 72, a digital image record wherein all the non-image data area between negative strips, perforation bar-codes, etc. are removed from the record provided the desired color background to these areas around the image areas, such as making the background white, grey, or black, selecting an appropriate layout format in accordance with the physical layout of the individual layout of the negatives in the holder 24 and provide the appropriate information regarding film type, frame, previously obtained from the DX bar-codes. The next step 74 would be to take the image record and send it over to the printer 44 for printing of the index print. The last step 76 would be to take the index print and combine it with the holder 24.

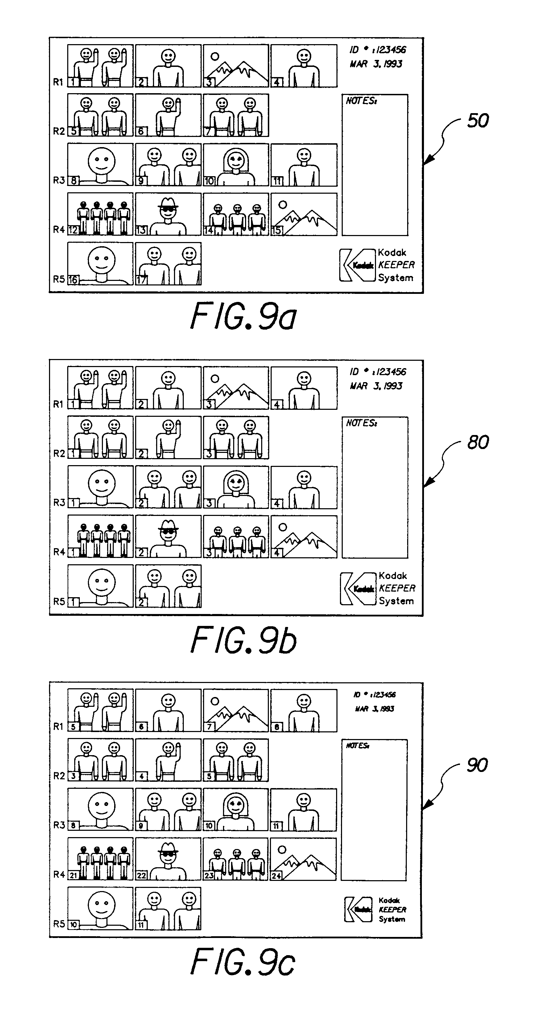

Referring to Figure 9a there is illustrated an index print 50 made of the filmstrip negative provided in the holder 24. In this particular format the index print 50 is provided with row identification numbers R1 and R2, R3, R4 and R5 for identifying each of the rows of the filmstrips provided in the holder. Associated with each of the images are sequential numbers of the various images on the film. In the particular embodiment illustrated since there are seventeen images that are sequentially numbered. In the particular embodiment illustrated, the right hand portion of the index print 50 is provided with other data. For example, the date in which the index print was made, identification number and a section for providing the most informational text requested by the customer or added on by the processor. For example, if the individual strips are taken from various different rolls of film notations as to which rolls or subject matter they relate to can be printed on the index print. Additionally, appropriate trademarks and logos may be provided on the index print by the photofinisher for advertising their goods and services.

Referring to Figure 9b, there is illustrated an index print 80 of the negative filmstrip of Figure 1 Index print 80 is similar to index print 50 except that the individual image areas are numbered for each row. Therefore, the first row having only four images, the numbers go up to four, whereas in the second row there are provided three images and thus are sequentially numbered to up three. Similar like numbering is provided in rows R3, R4 and R5.

Referring to Figure 9c, there is illustrated an index print 90 is similar to the index prints 50 and 80 except in this particular embodiment the numbers adjacent to each image area represent the sequential number obtained from DFX code or OCR code of the alphanumeric frame number written on the filmstrip from where it was taken. This information can be particularly useful when the individual filmstrips have been taken from various different rolls of film so that identification of its source can be readily obtained.

While three different index print formats have been described, it is to be understood that any desired format may be used as is selected by the user and/or processor.

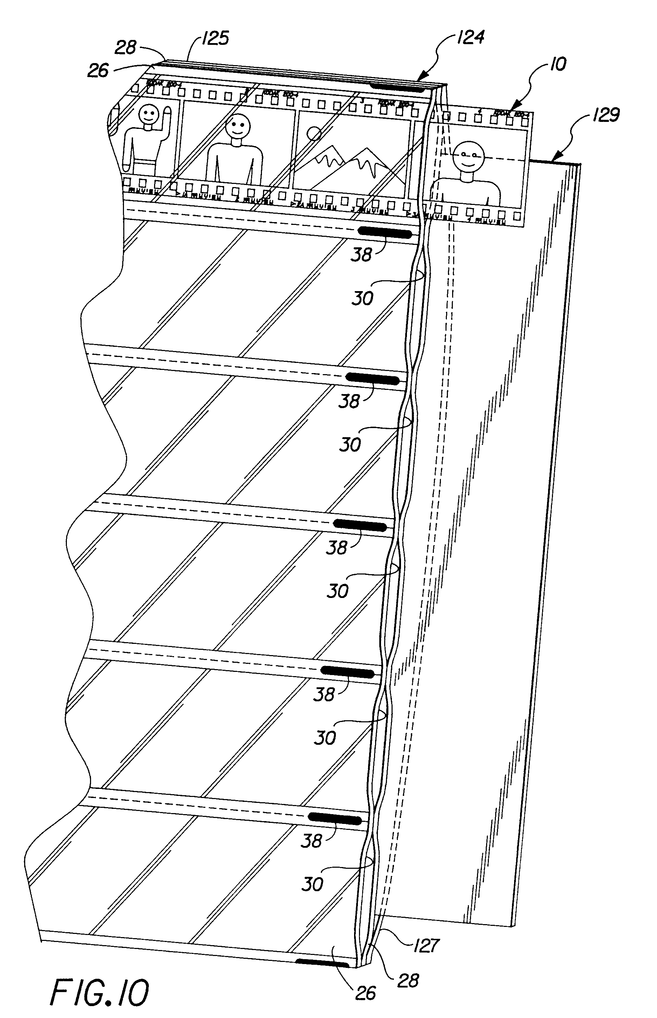

Referring to Figure 10, there is illustrated a modified holder 124 made in accordance with the present invention. The holder 124 is similar to holder 24, like numerals indicating like parts. An additional sheet 125 is secured to either sheet 26 or 28 at its lateral edges so as to form a retaining pocket 127 designed to receive and hold an index print 129. The sheet 125 is preferably sized so that the retaining pocket 127 will be slightly larger than the index print. The sheet 125 is made of a material so that it will not interfere with the scanning of the negative filmstrip. Preferably sheet 125 is also made of a clear plastic such as polyethylene. Thus, it can be easily seen that the index print 129 will have the image areas at some relative location as the images on the negative filmstrip in the holder 24. This, of course, will make locating the appropriate negative very quick. Additionally, information can be provided on the index print which may be helpful in printing of the negative filmstrips.

While specific reference has been made to the use of negative film the present invention is equally applicable for use with positive film, slides, slide strips, color, and black and white imaging.

It is to be understood that various changes and modifications may be made without departing from the scope of the present invention, the present invention being limited by the following claims.

## Claims

1. A method of producing an index print (50; 80; 90; 129) from at least one filmstrip (10, 11, 12, 13, 14, 15) having at least one image area (16), the method comprising the steps of:-
providing a film holder (24; 124) having at least one sleeve (30) for holding said at least one filmstrip (10, 11, 12, 13, 14, 15); and
scanning said film holder (24; 124) and the image areas (16) present on said at least one filmstrip (10, 11, 12, 13, 14, 15) located therein so as to obtain a digital record.

2. A method according to claim 1, further including the step of printing said digital record to form an index print (50; 80; 90; 129).

3. A method according to claim 2, wherein image areas on said at least one filmstrip (10, 11, 12, 13, 14, 15) are identified and all information not related to said image areas is removed, prior to the printing step.

4. A method according to claim 2, wherein image areas of the index print (50; 80; 90; 129) are arranged in a predetermined pattern.

5. A method according to any one of claims 1 to 4, wherein the scanning step is carried out in a digital scanner (48).

6. A method of archiving a plurality of individual filmstrips (10, 11, 12, 13, 14, 15) made from a plurality of different rolls of film, the method comprising the steps of:-
providing a transparent filmstrip holder (24; 124) having at least one sleeve (30) for holding a filmstrip (10, 11, 12, 13, 14, 15) having at least one image area (16);
placing said filmstrip holder (24; 124) on a digital scanner (48) and scanning the images present on said negative filmstrip (10, 11, 12, 13, 14, 15) so as to obtain a digital record;
identifying the image areas (16) on said at least one filmstrip (10, 11, 12, 13, 14, 15);
preparing a digital image record for printing wherein all information not related to said image areas (16) is removed and said digital image areas are arranged for printing; and
printing said digital image record wherein said non-image data has been removed.

7. A holder (24; 124) comprising at least one sleeve (30) which is designed to hold at least one filmstrip (10, 11, 12, 13, 14, 15) having at least one image area (16), each sleeve (30) having a datum (38) so as to identify the orientation of said holder (24; 124) and/or locate the at least one image area (16).

8. A holder (24; 124) for holding a plurality of filmstrips (10, 11, 12, 13, 14, 15), said holder (24; 124) comprising a pair of sheets (26, 28) secured together at appropriate locations so as to provide a plurality of sleeves (30), each sleeve (30) being configured so as to receive at least one filmstrip (10, 11, 12, 13, 14, 15), said sheets (26, 28) being made out of a material so as to allow digital scanning of said at least one filmstrip (10, 11, 12, 13, 14, 15) placed in said sleeves (30), said holder (24; 124) having datum (38) associated with each of said sleeves (30) for orienting and identifying the position of said holder (24; 124).
